(19) **Europäisches Patentamt**

**European Patent Office**

**Office européen des brevets**

(11) Veröffentlichungsnummer: **0 002 270**

**B1**

(12) **EUROPÄISCHE PATENTSCHRIFT**

(21) Anmeldenummer: **78101507.8**

(22) Anmeldetag: **01.12.78**

(51) Int. Cl.³: **B 01 L 11/00**, **B 04 B 5/04**, **A 61 B 5/14**

(54) Vorrichtung zum Abscheiden von Erythrozyten

(30) Priorität: **05.12.77 CH 14831/77**

(43) Veröffentlichungstag der Anmeldung:
**13.06.79 Patentblatt 79/12**

(45) Bekanntmachung des Hinweises auf die Patenterteilung:
**01.10.80 Patentblatt 80/20**

(84) Benannte Vertragsstaaten:
**CH DE FR GB IT SE**

(56) Entgegenhaltungen:
**FR - A - 646 027**
**US - A - 1 730 776**
**US - A - 2 507 309**

(73) Patentinhaber: **CONTRAVES AG**
**Schaffhauserstrasse 580**
**CH - 8052 Zürich (CH)**

(72) Erfinder: **Lorenz, Adrian, Dr.**
**Voltastrasse 33**
**CH - 8044 Zürich (CH)**
**Frey, Raymond, Dr.**
**Schweigmatt 39**
**CH - 8055 Zürich (CH)**

(74) Vertreter: **Köver, François, Dr. et. al.**
**Patentanwälte H. Mitscherlich K. Gunschmann,**
**Dr. W. Körber, J. Schmidt-Evers**
**Steinsdorfstrasse 10**
**D - 8000 München 22 (DE)**

Courier Press, Leamington Spa, England.

### Vorrichtung zum Abscheiden von Erythrozyten

Die Erfindung betrifft eine Vorrichtung zum Abscheiden von Erythrozyten in einer Blutprobe, gemäß dem Oberbegriff des Anspruches 1.

Zur elektronischen Zählung der in einer Blutprobe enthaltenen Thrombozyten ist es zweckmässig, vorerst möglichst viele Erythrozyten aus der Blutprobe zu entfernen, denn die Erythrozyten sind zahlreicher und viel größer als die Thrombozyten, so daß sie die Messung stören. Es ist bekannt, zur Entfernung der Erythrozyten die Blutprobe zu zentrifugieren: die Erythrozyten sammeln sich in einem Sediment, und die überstehende Flüssigkeit ist für die Zählung der Thrombozyten geeigneter als die nicht zentrifugierte Probe.

Es ist eine Zentrifuge bekannt, in der die Röhrchen derart am Rotor gehaltert werden, daß ihre Längsachsen mit der Drehachse des Rotors unter einem konstanten kleinen Winkel (z.B. 3°) zusammenlaufen: die Röhrchen sind also am Rotor nicht schwenkbar. Bei dieser Anordnung wirkt die Zentrifugalkraft annähernd quer zur Röhrchenachse, so daß bei mit Vollblut beschickten Röhrchen die Erythrozyten auf einem kurzen Weg (höchstens über einen Röhrchendurchmesser) wandern und sich entsprechend schnell an der von der Drehachse abgewandten Seite der Röhrchenwand sammeln. Zudem begünstigt die Krümmung der Röhrchenwand eine besonders dichte Ansammlung der Erythrozyten, worauf bekanntlich eine in der Fachsprache als "Geldrollenbildung" bezeichnete Aggregation der Erythrozyten stattfindet. Die solcherart gebildeten Aggregate oder "Geldrollen" weisen eine bedeutend höhere Sedimentationsgeschwindigkeit auf als die einzelnen Erythrozyten. Nachteilig wirkt sich aus, dass sich das Sediment während der Zentrifugation entlang der gesamten Füllungshöhe des Röhrchens ablagert: nach dem Stillstand des Rotors wandert das Sediment zum Boden des Röhrchens, was einerseits Zeit braucht und andererseits eine teilweise Rückmischung oder Resuspendierung der Erythrozyten bewirkt. Es wird beobachtet, dass Sediment und Ueberstand (überstehende Flüssigkeit) nicht durch eine klare Trennfläche getrennt werden, und dass der erythrozytenarme Ueberstand prozentual zum totalen Probenvolumen sehr gering ist. Die Entnahme einer erythrozytenarmen Probe aus diesem Ueberstand ist daher sehr kritisch, da durch die beim Abpipettieren entstehenden Strömungen in unkontrollierbarer Weise auch Erythrozyten aus dem Sediment eingeschwemmt werden. Die Erythrozytenkonzentration in der abpipettierten Probe ist daher grossen Schwankungen unterworfen.

Es ist eine andere Zentrifuge bekannt, in der die Röhrchen ebenfalls am Rotor nicht schwenkbar angeordnet sind, wobei ihre Längsachse mit der Drehachse des Rotors unter einem konstanten, grösseren Winkel (z.B. 30°) zusammenläuft. Bei dieser Anordnung sammelt sich das Sediment bereits während der Zentrifugation in Nähe des Röhrchenbodens; nachteilig ist aber, dass die Erythrozyten über einen längeren Weg als bei einer nahezu vertikalen Lage der Längsachse des Röhrchens wandern, bevor die Geldrollenbildung begünstigt wird, so dass die Sedimentation unter Einwirkung der Zentrifugalkraft länger dauert. Dies wiederum ist insofern nachteilig, als die belastung der Zellen durch die Zentrifugalkraft eine im statistischen Sinne fortschreitende morphologische Veränderung der Zellen bewirkt. Des weiteren ist nachteilig, dass während der Zentrifugation die sich bildende Trennfläche zwischen dem Sediment und dem Ueberstand annährend vertikal verläuft und daher schräg zur Röhrchenachse liegt. Bleibt das Röhrchen nach dem Stillstand des Rotors noch eine Weile an seinem Platz, so stellt sich eine horizontale Trennfläche ein, die aber ebenfalls zur Röhrchenachse geneigt ist. Wird das Röhrchen sofort nach dem Stillstand des Rotors oder später der Zentrifuge entnommen, so kommt es in einen Ständer, der normalerweise für eine vertikale Röhrchenachse vorgesehen ist, und die Trennfläche stellt sich wieder horizontal ein, d.h. nun quer zur Röhrchenachse. Wie ersichtlich tritt mindestens einmal ein Rückmischungseffekt auf, der zwar schwächer ist als bei der ersten beschriebenen Anordnung, doch bleiben die dort genannten Nachteile im wesentlichen die gleichen.

Es ist ferner eine Zentrifuge bekannt, in der die Röhrchen schwenbar gehaltert sind und sich unter dem Einfluss der Zentrifugalkraft von der vertikalen Lage bis beinahe in die horizontale Lage einstellen können. Die Zentrifugalkraft wirkt bei dieser Anordnung wunschgemäss in Richtung der Röhrchenachse und des Röhrchenbodens. Nachteilig ist aber, dass die Erythrozyten über einen langen Weg wandern, welcher der gesamten Füllungshöhe des Röhrchens gleich sein kann: dies wirkt der schnellen Geldrollenbildung entgegen oder hebt sie vollständing auf, wenn die Probe aus verdünntem Blut besteht, denn die Geldrollenbildung setzt nur an solchen Orten ein, wo die Verdünnung der Erythrozyten das Verhältnis von etwa 1:5 nicht übersteigt. Des weiteren ist nachteilig, dass die durch die wandernden Zellen verursachte Verdrängungsströmung der Sedimentation entgegenwirkt. Um den notwendigen Trennungsgrad zu erreichen, ist daher eine lange Zentrifugationszeit erforderlich, welche wiederum die morphologische Veränderung der Zellen erhöht.

Eine richtige Abscheidung der Erythrozyten wird erreicht und der Rückmischungseffekt weitgehend vermieden, wenn die Röhrchen beim Stillstand des Rotors unter dem Einfluss der Schwerkraft sich in einer solchen Ruhelage einstellen, dass ihre Längsachsen im wesentlichen vertikal sind, und wenn die Röhrchen bzw. ihre Halterungen während der Zentrifugation unter dem kombinierten Einfluss der Schwerkraft und der Zentrifugalkraft bis zu einem Anschlag ausschwenken, so dass die Längsachsen der Röhrchen eine vorbestimmte Schräglage einnehmen. Beim Anlaufen und beim Auslaufen des Rotors gehen die Längsachsen der Röhrchen — der momentanen Zentrifugalkraft entsprechend stetig von der vertikalen bzw. schrägen in die schräge bzw. vertikale Lage über. So wird das Sediment während der Zentrifugation in Nähe des Röhrchenbodens gesammelt, wobei der Weg, den die Teilchen bis zur Geldrollenbildung durchzuwandern haben, nicht so lang ist wie bei einer Zentrifugation mit nahezu horizontalen Längsachsen der Röhrchen. Beim Auslaufen des Rotors geht die während der Zentrifugation vertikal und daher schräg zurlängsachse der Röhrchen liegende Trennfläche zwischendem Sediment und der Flüssigkeit — der absinkenden Drehzahl entsprechend — langsam und stetig in die horizontale und gleichzeitig senkrecht zur Längsachse der Röhrchen liegende Lage über.

Der Rückmischungseffekt wird durch diesen langsamen und stetigen Lagewechsel der Röhrchen weitgehend vermieden, um so mehr, als die Resultierende aus Gewicht und Zentrifugalkraft nach dem Zeitpunkt, wo sich die Halterungen von den Anschlägen lösen, stets in Richtung der Längsachse der Röhrchen wirkt. Beim Stillstand des Rotors stehen die Röhrchen mit vertikaler Längsachse. Es werden also die Vorteile der einzelnen vorbekannten Zentrifugationsmethoden kombiniert, ohne dass deren Nachteile in Kauf zu nehmen wären; im Endresultat wird einerseits eine kürzere Zentrifugationszeit und daher eine geringere morphologische Veränderung der Erythrozyten andererseits eine optimale Unterdrückung der Rückmischung zwischen dem Sediment und der überstehenden Flüssigkeit erreicht.

Es ist aber nötig, die Schräglage der Röhrchen zur optimalen Anpassung an die jeweiligen Erfordernisse der zu zentrifugierenden Proben (entsprechend der Blutverdünnung, dem Röhrchendurchmesser u. dergl.) zwischen nahezu 0° und 90° einstellen zu können. Aus den Patentdokumenten US - A - 2739759, US - A - 3722789 und US - A - 3951334 sind Zentrifugen bekannt, bei denen am Rotor einstellbare Schrauben als Anschläge zur Begrenzung des Ausschwenkens der Röhrchen bzw. deren Halterungen angeordnet sind; diese bekannten Anschläge müssen jedoch einzeln eingestellt werden, so dass es schwierig ist, unterschiedliche Einstellungen der Anschläge und die entsprechende Unwucht am Rotor zu vermeiden; auch können sich derartige Anschläge während des Zentrifugierens verstellen, und schliesslich ist es mühsam, die Einstellung der Anschläge zur Anpassung an geänderte Erfordernisse zu ändern sowie nach der Aenderung eine frühere Einstellung wieder zu erreichen. Ferner ist aus dem Patentdokument US - A - 2739759 bekannt, die Anschläge jeweils als Berührungsstellen eines mit Schlitzen versehenen scheibenförmigen Körpers und der ausgeschwenkten Röhrchen auszubilden, wobei je ein Röhrchen in einem der Schlitze während des Ausschwenkens radial geführt wird; bei dieser Ausführung sind die Anschläge jedoch nicht einstellbar.

Aufgabe der Erfindung ist, eine Vorrichtung der eingangs erwähnten Art zu schaffen, bei welcher unterschiedliche Einstellungen der einzelnen Anschläge praktisch ausgeschlossen und vorbestimmte Einstellungen leicht wieder herstellbar sind. Zur Lösung dieser Aufgabe ist die erfindungsgemässe Vorrichtung gekennzeichnet durch die im kennzeichnenden Teil des Anspruches 1 aufgeführten Merkmale. Vorteilhafte Ausbildungen ergeben sich aus den Unteransprüchen.

Im folgenden wird die Erfindung unter Bezugnahme auf die Zeichnung näher beschrieben, wobei in der Zeichnung nur die für die Funktionserklärung notwendigen Teile dargestellt werden. Erfindungsunwesentliche Teile wie Lagerung, Antrieb und dergleichen sind weggelassen. In allen Figuren werden gleiche Teile mit gleichen Bezugszeichen versehen.

Es zeigen:

Fig. 1 eine Draufsicht eines Rotors einer Zentrifuge mit je zwei darin eingesetzten Halterungen und Röhrchen, im Stillstand;

Fig. 2 je einen Halbschnitt eines Teiles des Rotors, einer Halterung und eines Röhrchens nach den Linien A—A und B—B der Fig. 1, bei der höchsten Drehzahl des Rotors;

Fig. 3 je einen Halbschnitt eines Teiles einer Variante des Rotors nach den Linien A—A und B—B der Fig. 1 zur Veranschaulichung einer Ausbildung der zu einem ringförmigen Körper zusammengefassten Anschläge;

Fig. 4 eine Seitenansicht der Ausbildung des ringförmigen Körpers nach Fig. 3 in zwei Varianten, und

Fig. 5 eine Seitenansicht einer Halterung für ein Röhrchen.

Ein Rotor einer Zentrifuge ist mit 1 bezeichnet. Am Rotor 1 sind zwei Aussparungen 2 für je eine Halterung 3 mit einem Röhrchen 4 vorgesehen, wobei die Längsachse des Röhrchens mit 5 bezeichnet wird. Jede Halterung ist mit zwei Achsstummeln 6 ausgestattet, mit denen sie in entsprechende, nach oben offene Ausnehmungen 7 des Rotors 1 eingesetzt und um eine horizontale Schwenkachse 8 schwenkbar gelagert sind. Die vertikale Drehachse des Rotors 1 ist mit 9 bezeichnet.

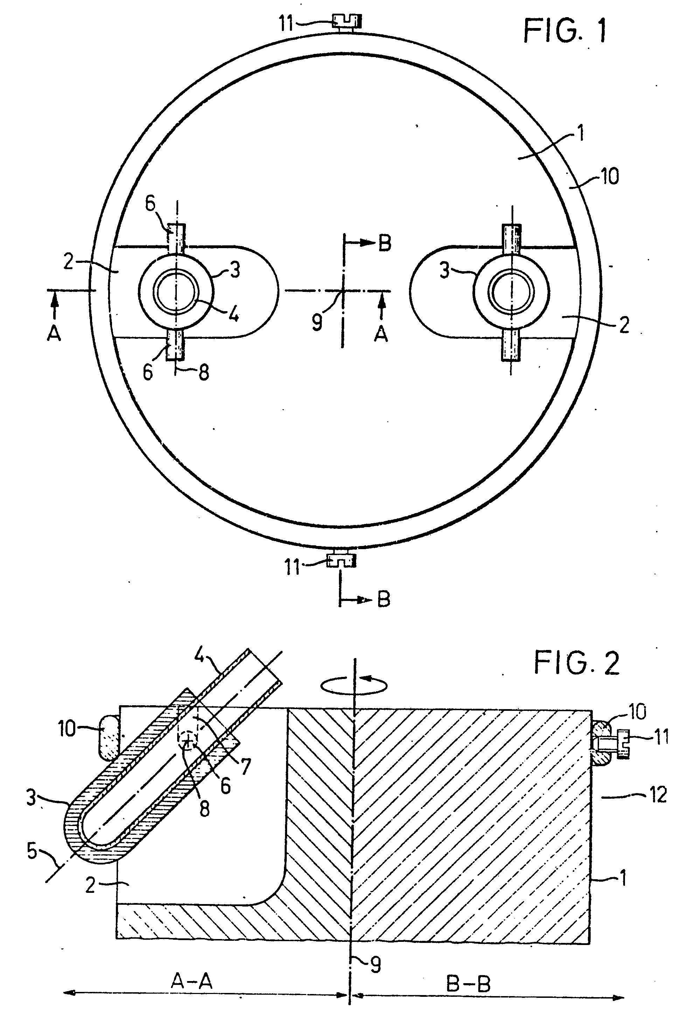

Fig. 1 und 2 zeigen einen Ring 10, der am Rotor axial verschiebbar angeordnet und mit den Feststellschrauben 11 auf einer gewünschten Höhe arretierbar ist. Auf Einzelheiten dieser Arretierung wird nicht eingegangen; es versteht sich, dass an sich bekannte Massnahmen getroffen werden, um Unwuchten insbesondere durch den Verlust der Schrauben während der Zentrifugation zu vermeiden. Der Ring 10 dient als Anschlag für jede Halterung 3 beim Einwirken einer starken Zentrifugalkraft zufolge der hohen Drehzahl des Rotors 1. Dies wird auf der linken Seite der Fig. 2 veranschaulicht: der Anschlag wird durch die Kontaktstelle der Halterung 3 und des Ringes 10 gebildet. In Fig. 1 ist der Ring etwa bandförmig, doch kann er auch einen runden Querschnitt aufweisen oder einen sonstigen Rotationskörper bilden. An der Oberfläche des Rotors 1 ist, etwa an der mit 12 bezeichneten Stelle, eine Skala angebracht oder graviert, um die Stellung des Ringes 10 anzuzeigen, damit diese notiert und wieder eingestellt werden kann.

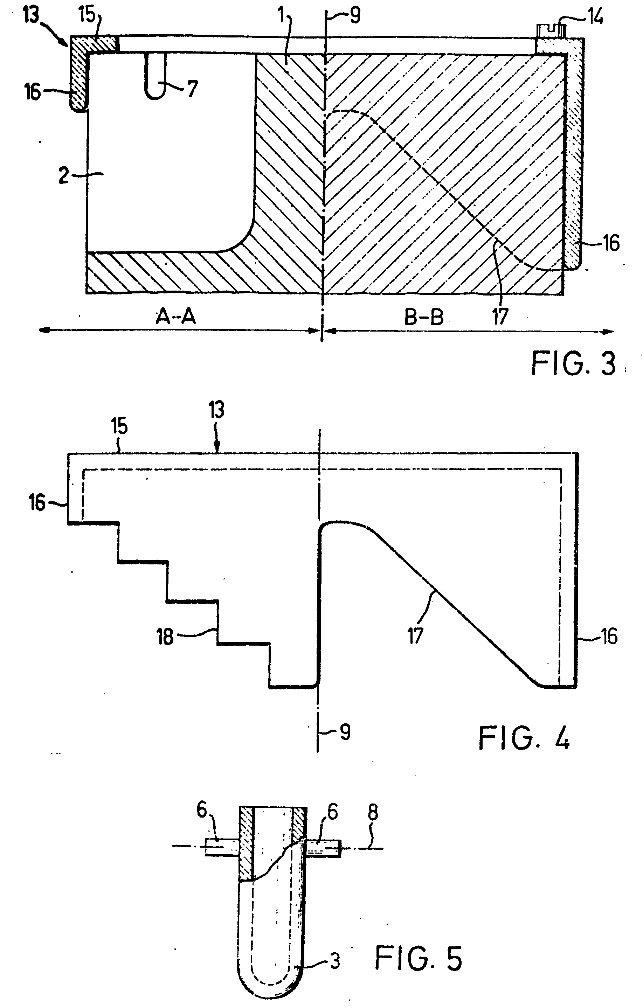

In einer besonderen Ausbildung nach Fig. 3 und 4 ist eine Hülse 13 auf dem Rotor 1 angeordnet und darauf mit Feststellschrauben 14 befestigt, derart, dass die Hülse 13 mit ihrem oberen Teil 15 und mit ihrem seitlichen Teil 16 am Rotor satt anliegt. Der untere Teil 17 der Hülse 13 ist sägezahnförmig ausgebildet, wie besonders aus Fig. 4 hervorgeht, wobei die Periodizität der Sägezahnform über den Umfang der Hülse 13 bzw. des Rotors 1 der Verteilung der Halterungen 3 am Rotor 1 entspricht. Die Begrenzung der Hülse 13 am unteren Teil 17 dient als einstellbarer Anschlag für jede Halterung 3: zu diesem Zweck wird die Hülse 13 gegenüber dem Rotor 1 so verdreht, dass der Kontakt zwischen der Hülse 13 und den ausschwenkenden Halterungen 3 auf der gewünschten Höhe stattfindet, worauf die Hülse durch die Feststellschrauben 14 arretiert wird. Auch bei dieser Ausbildung ist eine Skala, etwa an der mit 12 (siehe Fig. 2) bezeichneten Stelle, am Rotor 1 angebracht oder graviert, wobei die Skala entweder in vertikaler Richtung die Höhe der Begrenzung des unteren Teiles 17 der Hülse 13 oder in horizontaler Richtung die Winkellage der Hülse 13 in bezug auf den Rotor 1 anzeigen kann, so dass die Lage der Hülse 13 notiert und wieder eingestellt werden kann. In einer Variante kann der untere Teil der Hülse 13 unter Beibehaltung der allgemeinen Sägezahnform mit Stufen ausgebildet sein, wie in Fig. 4 durch den mit 18 bezeichneten unteren Teil der Hülse 13 gezeigt wird; diese Ausbildung erleichtert die präzise Einstellung der Anschläge.

Die Wirkungsweise der Zentrifuge kann am Beispiel der Zentrifugation einer Blutprobe wie folgt beschrieben werden: Mit zunehmender Drehzahl des Rotors 1 schwenken die Halterungen 3 unter dem Einfluss der Zentrifugalkraft immer weiter nach aussen, bis sie den als Anschlag wirkenden Ring 10 oder die Hülse 13 berühren und dadurch in einer vorbestimmten Stellung fixiert werden. Die abgesonderten Erythrozyten sammeln sich in Nähe des Bodens der Röhrchen 4 an. Nach Beendigung der für die Trennung notwendigen Zentrifugationszeit nimmt die Drehzahl wieder ab, und die Zentrifugalkraft wird entsprechend kleiner. Das bewirkt, dass die zuerst fast vertikal stehende Trennfläche zwischen dem Sediment und der überstehenden Flüssigkeit sich immer schwächer neigt. Ist die Drehzahl so weit abgesunken, dass sich die Halterungen vom Anschlag lösen, so ist die Trennfläche bereits derart geneigt, dass sie senkrecht zur Längsachse 5 des jeweiligen Röhrchens liegt, und so bleibt sie, in welche Richtung auch immer sich die Halterung unter dem kombinierten Einfluss der Schwerkraft und der Zentrifugalkraft einstellen mag. Während des Auslaufes bleibt die Probe stets unter dem Einfluss einer in Richtung der Längsachse 5 und zum Röhrchenbodenhin wirkenden Kraft, was das Auftreten des Rückmischungseffektes verhindert. Mit weiter abnehmender Drehzahl und entsprechender Abnahme der Zentrifugalkraft schwenken die Halterungen 3 immer weiter gegen ihre vertikale Ruhelage zurück. Das Sediment hat genügend Zeit, sich langsam in eine Lage mit horizontaler Trennfläche zu verschieben, und hat diese Lage beim Stillstand des Rotors 1 bereits erreicht. Das Sediment und/oder die Flüssigkeit können sofort ihrer weiteren Verwendung zugeführt werden.

**Patentansprüche**

1. Vorrichtung zum Abscheiden von Erythrozyten in einer Blutprobe, mit einem um eine vertikale Achse drehbaren Rotor, an welchem mehrere je um eine horizontale Achse schwenkbare Halterungen für je ein die Flüssigkeit enthaltendes längliches Röhrchen angeordnet sind, wobei die Halterungen sich beim Stillstand des Rotors in einer Ruhelage befinden und bei Drehung des Rotors unter dem Einfluß der Zentrifugalkraft aus dieser Ruhelage ausschwenken, am Rotor zur Begrenzung des Ausschwenkens der Halterungen Anschläge angeordnet sind, wobei je ein verstellbarer Anschlag als Berührungsstelle einer ausgeschwenkten Halterung vorgesehen ist, dadurch gekennzeichnet, daß die Anschläge für alle Halterungen als ein den Rotor umgebender Körper (10) ausgebildet sind und der Körper (10) am Rotor (1) dreh- oder verschiebbar und feststellbar angeordnet ist.

2. Vorrichtung nach Anspruch 1, dadurch gekennzeichnet, daß der Körper (10) als verstellbaren Anschlag in seinem unteren Teil (17) eine im allgemeinen sägezahnförmige Begrenzung aufweist.

3. Vorrichtung nach Anspruch 1, dadurch gekennzeichnet, daß der Körper (10) als verstellbaren Anschlag in seinem unteren Teil (18) eine im allgemeinen sägezahnförmige, mit Stufen versehene Begrenzung aufweist.

4. Vorrichtung nach Anspruch 1, dadurch gekennzeichnet, daß eine Skala (12) zum Anzeigen der Stellung des Körpers (10) am Rotor (1) vorgesehen ist.

## Revendications

1. Dispositif pour séparer des érythrocytes d'un échantillon sanguin, à l'aide d'un rotor tournant autour d'un axe vertical, ce rotor comportant plusieurs fixations basculant chacune autour d'un axe horizontal, chaque fixation recevant une éprouvette allongée contenant le liquide, les fixations se trouvant dans une position de repos lorsque le rotor est errêté et lorsque le rotor tourne, les fixations basculent hors de cette position de repos sous l'effet de la force centrifuge, pour venir contre des butées prévues sur le rotor et qui servant à limiter le basculement vers l'extérieur des fixations, chaque butée réglable constituant une zone de contact pour une fixation en position basculée, dispositif caractérisé en ce que les butées pour les fixations sont réalisées sous la forme d'un organe 10 entourant le rotor, l'orange 10 étant réglable en rotation et en coulissement sur le rotor 1 en pouvant être bloqué sur celui-ci.

2. Dispositif selon la revendication 1 caractérisé en ce que l'organe 10 comporte à sa partie inférieure 17 une limite assimilable de façon générale à une forme en dents de scie et constituant la butée réglable.

3. Dispositif selon la revendication 1, caractérisé en ce que l'organe 10 comporte en sa partie inférieure 18 une limite assimilable de façon générale à une forme en dents de scie, avec des gradins, constituant la butée réglable.

4. Dispositif selon la revendication 1, caractérisé par une échelle 18 pour afficher la position de l'organe 10 par rapport au rotor 1.

## Claims

1. Apparatus, for separating erythrocytes in a blood sample, having a rotor which is rotatable about a vertical axis and on which are arranged several holders for respective elongate tubes containing the liquid, each holder being pivoted about a horizontal axis, so that the holders are in a rest position when the rotor is stationary and swing out from this rest position under the effect of the centrifugal force when the rotor is turning, there being stops arranged on the rotor to limit the outward swing of the holders, whereby an adjustable stop is provided as a contact point for each swung-out holder, characterised in that the stops for all the holders are formed by a body (10) surrounding the rotor and the body (10) is arranged on the rotor (1) in a rotatable or displaceable and lockable manner.

2. Apparatus according to claim 1, characterised in that as adjustable stop the body (10) exhibits in its lower portion (17) a general sawtooth-shaped boundary.

3. Apparatus according to claim 1, characterised in that as adjustable stop the body (10) exhibits in its lower portion (18) a boundary of a generally saw-toothed shape provided with steps.

4. Apparatus according to claim 1, characterised in that a scale (12) is provided for indicating the position of the body (10) on the rotor (1).

FIG. 1

FIG. 2

FIG. 3

FIG. 4

FIG. 5